# EUROPEAN PATENT SPECIFICATION

(11) **EP 1 944 962 B1**
(45) Date of publication and mention of the grant of the patent: **16.10.2013**
(21) Application number: 06810647.5
(22) Date of filing: 27.09.2006
(51) Int. Cl.: H04N 5/00, H04N 5/445

(54) **DISPLAY DEVICE, EXTERNAL CONNECTION DEVICE, AND SCREEN CONTROL METHOD**
DISPLAY-EINRICHTUNG, EXTERNE VERBINDUNGSEINRICHTUNG UND BILDSCHIRMSTEUERUNGSVERFAHREN
DISPOSITIF D AFFICHAGE, DISPOSITIF DE CONNEXION EXTERNE ET MÉTHODE DE COMMANDE D ÉCRAN

(30) Priority: 30.09.2005 JP 2005288077
(43) Date of publication of application: 16.07.2008
(73) Proprietor: Panasonic Corporation, Kadoma-shi Osaka 571-8501 (JP)
(72) Inventor: KAWASAKI, Akira, Chuo-ku, Osaka-shi, Osaka, 540-6207 (JP); NAKAYASU, Tetsuyuki, Chuo-ku, Osaka-shi, Osaka, 540-6207 (JP); NAGAI, Takahiro, Chuo-ku, Osaka-shi, Osaka, 540-6207 (JP); MASHIMO, Noriya, Chuo-ku, Osaka-shi, Osaka, 540-6207 (JP); SUZUKI, Yousuke, Chuo-ku, Osaka-shi, Osaka, 540-6207 (JP); ICHIKAWA, Kei, Chuo-ku, Osaka-shi, Osaka, 540-6207 (JP); IBARAKI, Hisami, Chuo-ku, Osaka-shi, Osaka, 540-6207 (JP); IWASAKI, Shiro, Chuo-ku, Osaka-shi, Osaka, 540-6207 (JP)
(74) Representative: Eisenführ, Speiser & Partner
(86) International application number: PCT/JP2006/319182
(87) International publication number: WO 2007/040122

(56) References cited:
- WO-A2-01/95616
- JP-A- 2001 359 178
- JP-A- 2002 135 676
- US-A1- 2002 044 764
- US-A1- 2002 063 797
- 'Philips 105S Electronic Users Manual', [Online] 29 August 2001, pages 1 - 96, XP055030396 Retrieved from the Internet: <URL:http://dl.owneriq.net/6/6741021a-ad0d- 4e12-891a-39e4b228307e.pdf> [retrieved on 2012-06-19]

## Description

### Technical Field

The present invention relates to a display device capable of displaying a graphical user interface (hereinafter, referred to as a "GUI"), an external connection device connected to the display device, and a screen control method.

### Background Art

US 2002/0044764 A1 describes a plurality of devices and a device system, in which a plurality of input devices generate an input AV signal, a related device records and reproduces the AV signal, a related device records and reproduces the AV signal, and a display device displays the AV signal. The input devices, the related device and the display device are interconnected to configure an AV system having a bus for transmitting or receiving the AV signal and management information. The related device of the AV system includes a recording medium for recording the AV signal, and the input devices transmit to the related device a request to secure a recording area on the recording medium.

GUIs are incorporated in various types of apparatuses, in order to enable users to recognize visually the functions provided to the apparatuses with ease and in order to enable the users to operate easily the functions. For example, a display device such as a television and an external connection device such as a DVD recorder which is connected to the display device incorporate GUIs dedicated to these devices. The GUI of the display device and the GUI of the external connection device connected to the display device are displayed on a display unit of the display device. The setting of displaying/non-displaying of the GUI of the display device is performed by operating buttons provided on the main body of the display device or a remote controller dedicated to the display device. The setting of displaying/non-displaying of the GUI of the external connection device is performed by operating buttons provided to the main body of the external connection device or a remote controller dedicated to the external connection device.

Similarly, in the case where video signals from the display device and video signals from the external connection device are displayed on the display unit of the display device, operations are performed using remote controllers dedicated to the respective devices. For example, in the case where video signals from the external connection device are displayed on the display unit of the display device, by operating the remote controller dedicated to the display device, the display device is powered up and then the setting of the display device is changed over such that video signals from the external connection device are inputted thereto. Thereafter, by using the remote controller dedicated to the external connection device, operations are performed such that video signals from the external connection device are displayed on the display unit. As described above, a command for replaying video signals from the external connection device is generated by holding both the remote controllers dedicated to the display device and the external connection device while changing over between these remote controllers, which requires complicated procedure. In order to overcome this problem, the patent document 1 discloses a method for displaying video signals from an external connection device on the display unit of a display device using a single remote controller dedicated to the display device.
Patent Document 1: JP-A-2004-274718

### Disclosure of Invention

### Problems To Be Solved by the Invention

The patent document 1 discloses a method for displaying video signals from the external connection device on the display unit of the display device, using the single remote controller dedicated to the display device. Therefore, the method disclosed in the patent document 1 can not enable operations for setting displaying/non-displaying of a GUI of the external connection device using the single remote controller dedicated to the display device. Accordingly, in order to perform the setting of displaying/non-displaying of the GUI of the display device and the GUI of the external connection device, both the remote controllers dedicated to the devices are required. Particularly, in order to restore the state of the display of the display unit from the GUI of the external connection device to the GUI of the display device, it is necessary that the GUI of the external connection device is erased using the remote controller dedicated to the external connection device and, thereafter, the GUI of the display device is displayed using the remote controller dedicated to the display device. That is, it is impossible to restore the display of the display unit from the GUI of the external connection device to the GUI of the display device only by operating the display device. The method of the patent document 1 can not overcome the problem of complicacy of procedure for setting displaying/non-displaying of GUIs.

It is an object of the present invention to provide a display device, an external connection device and a screen control method which simplify the procedure for setting displaying/non-displaying of GUIs. More particularly, it is an object of the present invention to provide a display device, an external connection device and a screen control method which can restore the display of the display device from a GUI of the external connection device to a GUI of the display device when a user performs operations of the display device.

### Means for Solving the Problems

A display device according to the present invention includes: a display unit capable of displaying one or more screen pages for operations of the display device and one or more screen pages for operations of an external connection device which is connected to the display device; an operation input unit which receives an operation code for operating the display device, directly or through a remote controller; and a control unit which controls the display device based on the received operation codes. When the operation input unit receives an operation code for restoring screen display while a screen page for operations of the external connection device is displayed on the display unit after displaying a screen page for operations of the display device, the control unit controls screen display so that the screen page displayed on the display unit is restored to the screen page for operations of the display device. The "screen page for operations of the display device" corresponds to "Display Device GUI" in embodiments. The "screen page for operations of the external connection device" corresponds to "External Connection Device GUI" in embodiments. The "operation codes for operating the display device" is referred to as comprehensive operation codes including the "operation code for restoring screen display". The "operation code for restoring screen display" is referred to as a code inputted to the operation input unit when a "Return" button is pushed in embodiments. According to this invention, it is possible to restore the display from a GUI of the external connection device to a GUI of the display device with simple operations.

The display device may further include a storage unit. When the display unit displays a screen page for operations of the external connection device after displaying a screen page for operations of the display device, the control unit may store information about the screen page for operations of the display device in the storage unit. When the screen display of the display unit is restored from the screen page for operations of the external connection device to the screen page for operations of the display device, the control unit may control the display unit to display the screen page for operations of the display device based on the information about the screen page for operations of the display device which is stored in the storage unit. When the screen display is restored from a GUI of the external connection device to a GUI of the display device, information about a desired GUI of the display device which is desired to be displayed on the display unit can be preliminarily stored in the storage unit, which enables displaying the desired GUI of the display device when restoring the screen display from the GUI of the external connection device to the GUI of the display device. For example, at the time of the transition from a GUI of the display device to a GUI of the external connection device, information about the GUI of the display device which is being displayed on the display unit can be stored in the storage unit, which enables displaying the GUI of the display device which was displayed just before the transition to the GUI of the external connection device based on the information in the storage unit when the screen display is restored from the GUI of the external connection device to a GUI of the display device.

If the operation input unit receives an operation code for restoring screen display, the control unit may inform the external connection device of reception of the operation code for restoring screen display. When the control unit receives a command for displaying a screen page for operations of the display device from the external connection device, the control unit may control the display unit to display the screen page for operations of the display device based on the information stored in the storage unit. At the time of the transition from a GUI of the display device to a GUI of the external connection device, the GUI of the external connection device in the highest hierarchy is displayed, at first. Thereafter, a transition from the GUI of the external connection device in the higher hierarchy to a GUI in a lower hierarchy may occur, according to a user's instruction. In this case, based on a command from the external connection device, the screen display can be controlled so that the display of the display unit is restored to a GUI of the display device, for example, only when the GUI of the external connection device which is being displayed on the display unit is in the highest hierarchy.

When the operation input unit receives an operation code for restoring screen display, the control unit may determine whether or not information about a screen page for operations of the display device is stored in the storage unit. If the information about a screen page for operations of the display device is stored in the storage unit, the control unit may inform the external connection device of reception of the operation code for restoring screen display. In the case where a GUI of the external connection device was displayed by operating the external connection device without operating the display device, that is, without passing through a GUI of the display device, the screen display can be controlled such that it is not restored from the GUI of the external connection device to a GUI of the display device.

The display device may further include one or more signal supply sources which input video signals to be displayed on the display unit. When the display unit displays a screen page for operations of the external connection device after displaying a screen page for operations of the display device, the control unit may store, in the storage unit, information about the signal supply source being selected. When the screen display is restored from the screen page for operations of the external connection device to the screen page for operations of the display device, the control unit may read the information about the signal supply source from the storage unit and may control the display unit to display video signals from the signal supply source which is selected based on the read information about the signal supply source. This enables restoring video signals being displayed, as well as the GUI being displayed, to video signals from the signal supply source displayed just before a GUI of the external connection device is displayed.

An external connection device according to the present invention includes: a data output unit which transmits, to a display device, screen pages for operations of the external connection device; a command input/output unit which transmits and receives commands to and from the display device; and a control unit which controls the external connection device. When the command input/output unit receives, from the display device, a command indicating reception of an operation code for restoring screen display, the control unit determines whether or not the screen page being transmitted to the display device is a screen page in a highest hierarchy and, if the control unit determines that the screen page being transmitted to the display device is the screen page in the highest hierarchy, the control unit stops the transmission of the screen page for operations of the external connection device and transmits, to the display device, a command for displaying a screen page for operations of the display device, through the command input/output unit. A transition from a GUI of the display device to the GUI of the external connection device in the highest hierarchy can occur and, thereafter, a transition from the GUI of the external connection device in the higher hierarchy to a GUI thereof in a lower hierarchy can occur, according to user's instructions. In this case, when an operation code for restoring screen display is inputted to the display device while the GUI in a lower hierarchy is transmitted to the display device, the external connection device controls the transmission so that the GUI transition backs from a GUI in a lower hierarchy to a GUI in a higher hierarchy until the display screen is reached to the GUI in the highest hierarchy. When an operation code for restoring screen display is inputted to the display device while the GUI in the highest hierarchy is transmitted to the display device, the external connection device generates a command for displaying a GUI of the display device. This enables the user to restore GUIs in the order of transition, with simple procedure, without distinguishing between the display device and the external connection device.

A screen control method according to the present invention is a method for controlling a screen of a display device capable of displaying, on its display unit, one or more screen pages for operations of the display device and one or more screen pages for operations of an external connection device which is connected to the display device. The method includes: receiving an operation code for operating the display device directly or through a remote controller; and, displaying, on the display unit, a screen page for operations of the display device when an operation code for restoring screen display of the display device is received while a screen page for operations of the external connection device is displayed on the display unit after displaying a screen page for operations of the display device thereon.

The screen control method may further include storing information about the screen page for operations of the display device, in a storage unit of the display device when a screen page for operations of the external connection device is displayed after a screen page for operations of the display device is displayed. In this case, when the screen display is restored from the screen page for operations of the external connection device to the screen page for operations of the display device, the display unit may be controlled to display the screen page for operations of the display device based on the information about the screen page for operations of the display device which is stored in the storage unit.

The screen control method may further include: informing the external connection device of reception of an operation code for restoring screen display of the display device, and determining whether or not a command for displaying a screen page for operations of the display device is received from the external connection device. The display unit may be controlled to display the screen page for operations of the display device based on the information stored in the storage unit when the command for displaying a screen page for operations of the display device is received from the external connection device.

The screen control method may further include determining whether or not information about a screen page for operations of the display device is stored in the storage unit when receiving an operation code for restoring screen display of the display device. When the information about a screen page for operations of the display device is stored in the storage unit, the external connection device may be informed of reception of the operation code for restoring screen display of the display device.

In case that the display device includes one or more signal supply sources which receive video signals, the screen control method may further include storing information about the signal supply source being selected, in the storage unit, when the display unit displays a screen page for operations of the external connection device after displaying a screen page for operations of the display device. When the screen display is restored from the screen page for operations of the external connection device to the screen page for operations of the display device, the information about the signal supply source may be read from the storage unit and the display unit can be controlled to display video signals from the signal supply source which is selected based on the read information about the signal supply source.

### Effects of the Invention

According to the display device, the external connection device and the screen control method of the present invention, the screen display can be restored from a GUI of the external connection device to a GUI of the display device by operating the display device.

### Brief Description of Drawings

Fig. 1 is a diagram illustrating the configurations of a display device and an external connection device according to first to third embodiments of the present invention.
Fig. 2A and Fig. 2B is a view illustrating a GUI transition according to the first embodiment of the present invention.
Fig. 3 is a flow chart illustrating a process for displaying a GUI of the external connection device through operations of a remote controller dedicated to the display device according to the first embodiment of the present invention.
Fig. 4 is a flow chart illustrating a process for displaying a GUI of the external connection device through operations of a remote controller dedicated to the external connection device according to the first embodiment of the present invention.
Fig. 5 is a flow chart illustrating a process which is performed if a "Return" button on the remote controller dedicated to the display device is pushed, according to the first embodiment of the present invention.

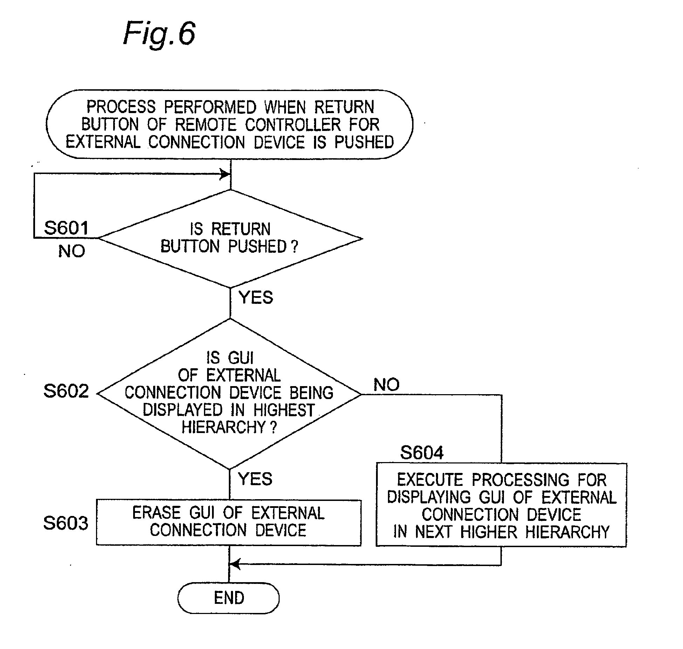

Fig. 6 is a flow chart illustrating a process which is performed if a "Return" button on the remote controller dedicated to the external connection device is pushed, according to the second embodiment of the present invention.
Fig. 7 is a view illustrating transitions of GUIs and video signals, according to the third embodiment of the present invention.
Fig. 8 is a flow chart illustrating a process for displaying a GUI of the external connection device through operations of a remote controller dedicated to the display device, according to the third embodiment of the present invention.
Fig. 9 is a flow chart illustrating a process which is performed if a "Return" button on the remote controller dedicated to the display device is pushed, according to the third embodiment of the present invention.

### Description of reference numerals

100: display device
101: control unit
102: storage unit
103: user operation input unit
104: command input/output I/F
105: data input I/F
106: data processing unit
107: display unit
108: switch
109: antenna
110: tuner
111: external input terminal
121: remote controller
122: Return button
200: external connection device
201: control unit
202: storage unit
203: user operation input unit
204: command input/output I/F
205: data output I/F
206: data processing unit
221: remote controller
222: Return button
301: data cable
302: command cable

### Best Mode for Carrying Out the Invention

Hereinafter, embodiments of the present invention will be described with reference to the drawings.

### (First Embodiment)

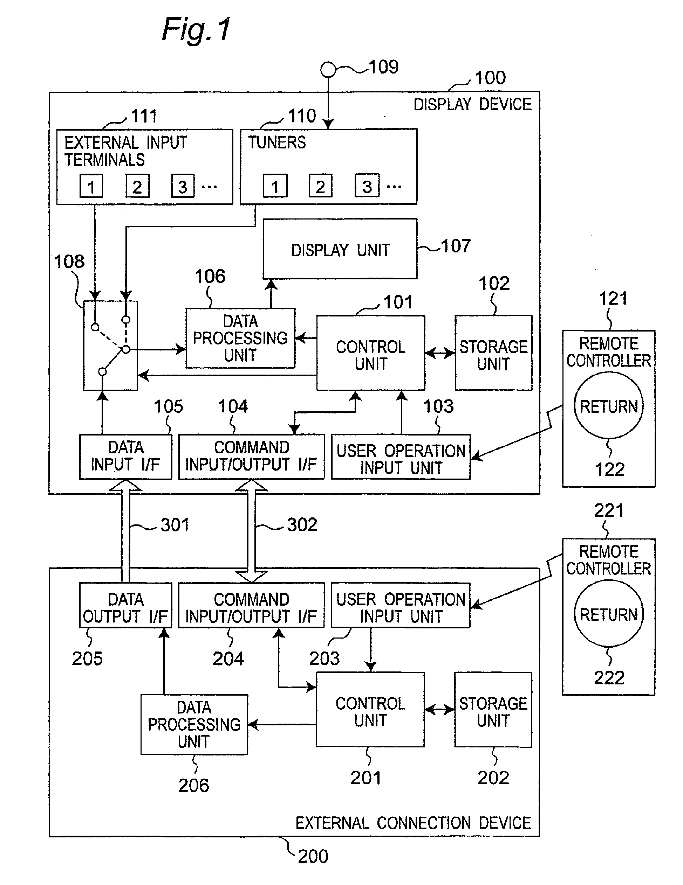

Fig. 1 illustrates a display device 100 having a displaying function and an external connection device 200 which is connected to the display device 100, according to a first embodiment of the present invention. In the present embodiment, the display device 100 is a television, and the external connection device 200 is a DVD recorder.

### (The Configuration of the Display Device)

The display device 100 includes a display unit 107 which displays video signals and GUIs .

The display device 100 includes a remote controller 121 dedicated to operating the display device 100. The remote controller 121 includes a "Return" button 122 for restoring the GUI being displayed on the display unit 107 to the GUI in the next higher hierarchy.

The display device 100 includes a user operation input unit 103 which receives operation codes for use in operating the display device 100 which are transmitted from the remote controller 121 dedicated to the display device. The user operation input unit 103 further has a function for enabling a user to input directly commands to the display device 100 without using the remote controller 121. For example, it has the same function as that of the "Return" button 122 on the remote controller 121.

The display device 100 further includes a control unit 101 which controls the inside of the display device 100 based on user's commands transferred from the user operation input unit 103, a storage unit 102 connected to the control unit 101, and a data processing unit 106 which creates GUIs of the display device 100. The GUIs of the display device 100 refer to screen pages for operations of the display device 100. The control unit 101 controls the data processing unit 106 to create GUIs dedicated to the display device, according to user's commands. Further, the control unit 101 stores, in the storage unit 102, information about the GUI of the display device 100 which is being displayed on the display unit 107, when the GUI being displayed on the display unit 107 is transitioned from the GUI of the display device 100 to a GUI of the external connection device 200.

The display device 100 further includes a command input/output interface (hereinafter, referred to as a "command input/output I/F") 104. The command input/output I/F 104 is connected to a command input/output I/F 204 of the external connection device 200, through a command cable 302 for transferring commands. The control unit 101 transmits and receives commands to and from the external connection device 200, through the command input/output I/F 104. For example, the control unit 101 transmits, to the external connection device 200, a command indicating that the "Return" button 122 on the remote controller 121 dedicated to the display device has been pushed, through the command input/output I/F 104. Further, if the command input/output I/F 104 receives a command for displaying a GUI of the display device 100 from the external connection device 200, then the control unit 101 reads the information about the GUI stored in the storage unit 102 and controls the data processing unit 106.

The display device 100 further includes a data input interface (hereinafter, referred to as a "data input I/F") 105 for receiving video signals from the external connection device 200 and GUIs of the external connection device 200, tuners 110 which input video signals transmitted from an antenna 109, and external input terminals 111 for connecting the display device 100 to external devices having the function of creating or outputting video signals. The data input I/F 105 is connected to a data output I/F 205 of the external connection device 200, through a data cable 301 for transferring video signals. The tuners 110 include a plurality of tuners as designated by "1", "2", "3",.... in the tuner 110 in Fig. 1. Similarly, the external input terminals 111 include a plurality of external input terminals as designated by "1", "2", "3", .... in the external input terminal 111 in Fig. 1. The data input I/F 105, the external input terminals 111 and the tuners 110 are connected to a switch 108. The switch 108 connects the data input I/F 105, any one of the external input terminals 111 or any one of the tuners 110 to the data processing unit 106.

The data processing unit 106 creates images to be displayed on the display unit 107 from video signals received from the external input terminals 111 or the tuners 110 and created GUIs of the display device 100 or from video signals from the external connection device 200 which are transferred through the data input I/F 105 and GUIs of the external connection device 200 and then outputs the images to the display unit 107.

### (The Configuration of the External connection Device)

The external connection device 200 includes a command input/output I/F 204 connected to the command input/output I/F 104 of the display device 100 through a command cable 302, and a data output I/F 205 connected to the data input I/F 105 of the display device 100 through the data cable 301.

The external connection device 200 includes a remote controller 221 dedicated to operating the external connection device 200. The remote controller 221 includes a "Return" button 222 for restoring the displayed GUI of the external connection device 200 to the next higher hierarchy.

The external connection device 200 further includes a user operation input unit 203 which receives operations codes for use in operating the external connection device 200 which are transmitted from the remote controller 221 dedicated to the external connection device. The user operation input unit 203 further has a function for enabling the user to input directly commands to the external connection device 200 without using the remote controller 221. For example, it has the same function as that of the "Return" button 222 on the remote controller 221.

The external connection device 200 further includes a control unit 201 which controls the inside of the external connection device 200 based on user's commands received through the user operation input unit 203 or commands from the display device 100 which are received through the command input/output I/F 204, a storage unit 202 connected to the control unit 201, and a data processing unit 206 which creates video signals and GUIs of the external connection device 200. The GUIs of the external connection device 200 refer to screen pages for operations of the external connection device 200. On receiving a command for outputting a GUI from the display device 100 through the command input/output I/F 204, the control unit 201 controls the data processing unit 206 to create a GUI of the external connection device 200. The GUI created by the data processing unit 206 and video signals are transmitted to the display device 100 through the data output I/F 205. The control unit 201 stores, in the storage unit 202, information about the GUI of the external connection device 200 which is being transmitted to the display device 100.

### (Displaying a GUI of the External connection Device 200)

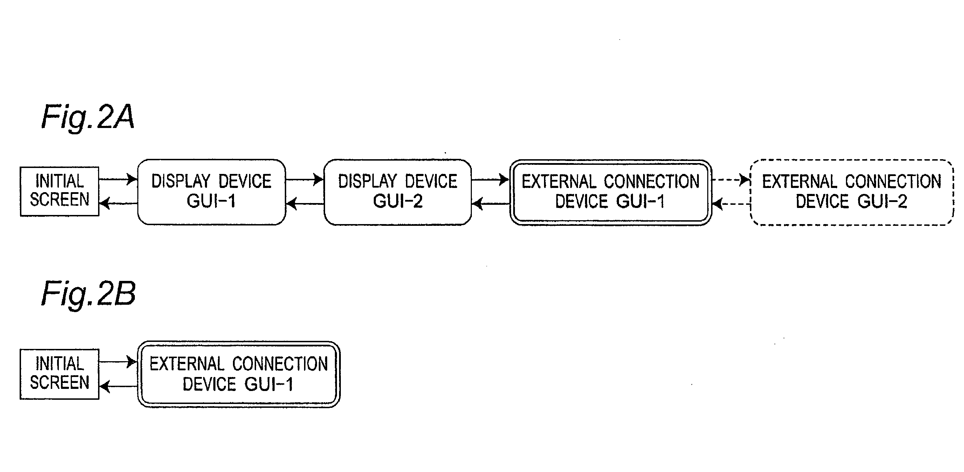

Fig. 2A and 2B illustrates a transition among GUIs displayed on the display unit 107 of the display device 100. Fig. 2A is a view illustrating a state of a transition from a GUI in a higher hierarchy to a GUI in a lower hierarchy in the case of using the remote controller 121 dedicated to the display device. Fig. 2A illustrates a GUI transition from "Initial Screen" to "Display Device GUI-1", then from "Display Device GUI-1" to "Display Device GUI-2", then "Display Device GUI-2" to "External connection Device GUI-1". Fig. 2B is a view illustrating a GUI transition in the case of using the remote controller 221 dedicated to the external connection device. Fig. 2B illustrates a GUI transition from "Initial Screen" to "External connection Device GUI-1". Further, Fig. 2A and Fig. 2B illustrate states where GUIs are changed back in the order of transition. In Fig. 2A and Fig. 2B, "Display Device GUI-1" and "Display Device GUI-2" indicate different GUIs of the display device 100, and "External connection Device GUI-1" indicates a GUI of the external connection device 200. Further, "Initial Screen" refers to a screen page which appears immediately after the activation of the display device 100.

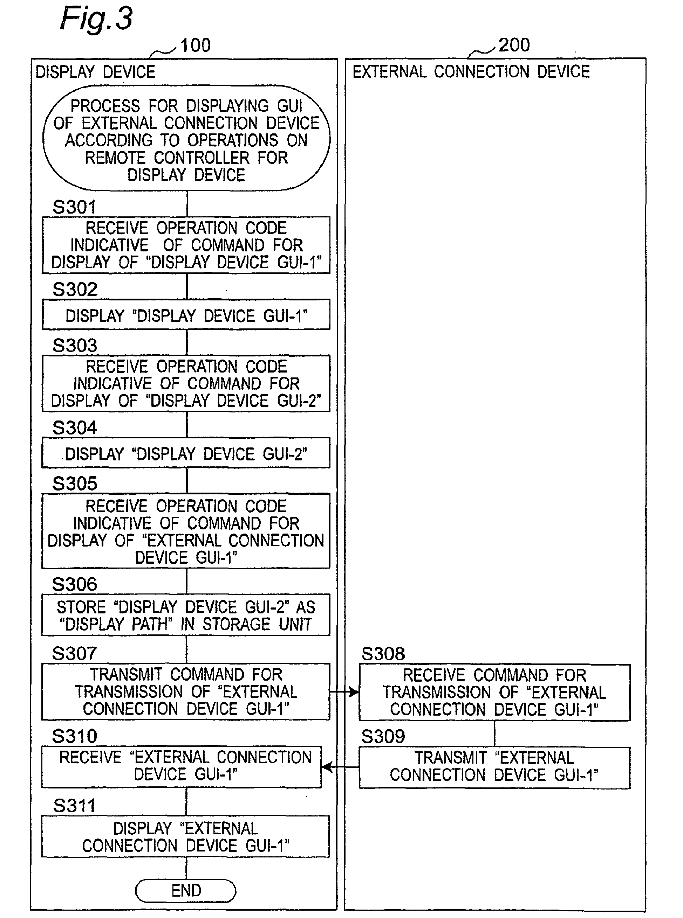

Fig. 3 illustrates the operations of the display device 100 and the external connection device 200, corresponding to the GUI transition of Fig. 2A. If a user generates a command for displaying "Display Device GUI-1" using the remote controller 121 dedicated to the display device at a state where "Initial Screen" is displayed on the display unit 107, then the user operation input unit 103 of the display device 100 receives an operation code indicative of the command for displaying "Display Device GUI-1", from the remote controller 121 dedicated to the display device (S301). The user operation input unit 103 informs the control unit 101 that it has received the operation code. The control unit 101 controls the data processing unit 106 to create "Display Device GUI-1". The data processing unit 106 creates "Display Device GUI-1" and transmits it to the display unit 107. The display unit 107 displays "Display Device GUI-1" (S302).

Next, if the user generates a command for displaying "Display Device GUI-2" using the remote controller 121 dedicated to the display device, the user operation input unit 103 receives an operation code indicative of the command for displaying "Display Device GUI-2" from the remote controller 121 dedicated to the display device (S303). The control unit 101 controls the data processing unit 106 to create "Display Device GUI-2". The display unit 107 displays, thereon, "Display Device GUI-2" created by the data processing unit 106(S304).

If the user inputs a command for displaying "External connection Device GUI-1" using the remote controller 121 dedicated to the display device, then the user operation input unit 103 receives an operation code indicative of the command for displaying "External connection Device GUI-1" from the remote controller 121 dedicated to the display device (S305). The control unit 101 stores, in the storage unit 102, information about "Display Device GUI-2" being displayed on the display unit 107, as a value of the "display path" (S306). The control unit 101 commands the data processing unit 106 to erase "Display Device GUI-2". The control unit 101 transmits a command for transmitting "External connection Device GUI-1", to the external connection device 200, through the command input/output I/F 104 (S307).

When the command input/output I/F 204 of the external connection device 200 receives this command (S308), the control unit 201 of the external connection device 200 commands the data processing unit 206 to create "External connection GUI-1". The data processing unit 206 creates "External connection Device GUI-1". The data output I/F 205 transmits "External connection Device GUI-1" to the display device 100 (S309).

The control unit 101 of the display device 100 connects the switch 108 to the data input I/F 105. The data processing unit 106 receives "External connection Device GUI-1" through the data input I/F 105 (S310) and transfers it to the display unit 107. The display unit 107 displays "External connection Device GUI-1" thereon (S311).

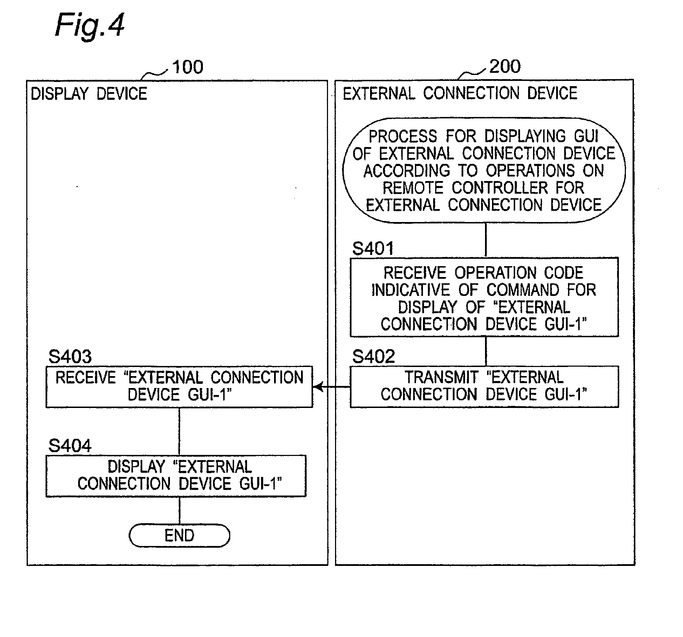

Fig. 4 illustrates the operations of the display device 100 and the external connection device 200 corresponding to the GUI transition of Fig. 2B. If the user inputs a command for displaying "External connection Device GUI-1" using the remote controller 221 dedicated to the external connection device at a state where "Initial Screen" is displayed on the display unit 107, then the user operation input unit 203 of the external connection device 200 receives an operation code indicative of the command for displaying "External connection Device GUI-1", from the remote controller 221 dedicated to the external connection device (S401). The user operation input unit 203 notifies the control unit 201 of reception of the operation code. The control unit 201 commands the data processing unit 206 to create "External connection Device GUI-1". The data processing unit 206 creates "External connection Device GUI-1" and transmits "External connection Device GUI-1" to the display device 100 through the data output I/F 205 (S402).

The data input I/F 105 of the display device 100 receives "External connection Device GUI-1" (S403). The data processing unit 106 transfers "External connection Device GUI-1" to the display unit 107. The display unit 107 displays "External connection Device GUI-1" thereon (S404).

The "display path" stored in the storage unit 102 of the display device 100 preliminarily has a default value. In the case where a GUI of the display device 100 is displayed and, thereafter, a GUI of the external connection device 200 is displayed, as illustrated in a flow chart of Fig. 3, information about the GUI of the display device 100 which was displayed on the display unit 107 just before the switching of the display is overwritten on the "display path". On the other hand, in the case where a GUI of the external connection device 200 is directly displayed without displaying a GUI of the display device 100, as illustrated in a flow chart of Fig. 4, the "display path" is maintained at the default value.

### (Operations Performed If the "Return" Button on the Remote Controller Dedicated to the Display Device is Pushed)

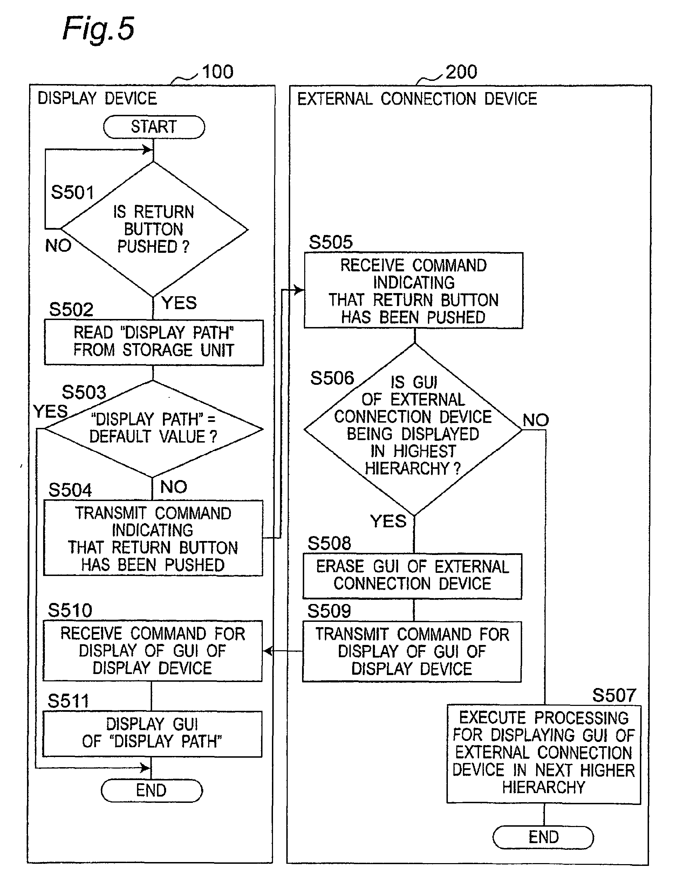

Fig. 5 illustrates the operations of the display device 100 and the external connection device 200 if the "Return" button 122 on the remote controller 121 dedicated to the display device is pushed at a state where a GUI of the external connection device 200 is displayed on the display unit 107.

The user operation input unit 103 of the display device 100 determines whether or not the "Return" button 122 on the remote controller 121 dedicated to the display device is pushed (S501). That is, the user operation input unit 103 determines whether or not it has received an operation code for restoring screen display. If the "Return" button 122 is pushed, then the user operation input unit 103 informs the control unit 101 that the "Return" button 122 has been pushed. The control unit 101 reads the "display path" from the storage unit 102 (S502). The control unit 101 determines whether or not the "display path" has the default value (S503).

If the "display path" has the default value (Yes at S503), then the processing is ended. For example, if "External connection Device GUI-1" is directly displayed after "Initial Screen" was displayed without displaying a GUI of the display device 100 along the path illustrated in Fig. 2B, the control unit 101 performs nothing. That is, "External connection Device GUI-1" is kept displayed on the display unit 107.

If the "display path" does not have the default value (No at S503), then the control unit 101 of the display device 100 generates a command indicating that the "Return" button 122 has been pushed and transmits the command to the external connection device 200 through the command input/output I/F 104 (S504).

The command input/output I/F 204 of the external connection device 200 receives the command indicating that the "Return" button 122 has been pushed, through the command cable 302 (S505). The control unit 201 of the external connection device 200 determines whether or not the GUI of the external connection device 200 which is being displayed on the display unit 107 of the display device 100, that is, the GUI of the external connection device 200 which is being transmitted to the display device 100, is the GUI in the highest hierarchy, out of the GUIs of the external connection device 200, based on the information about the GUI of the external connection device 200 which is stored in the storage unit 202 (S506). The "GUI in the highest hierarchy" refers to a GUI which is displayed at first on the display unit 107, if a command for displaying a GUI is generated at a state where no GUI is displayed. In Fig. 2, the GUI of the external connection device 200 in the highest hierarchy is "External connection Device GUI-1".

If the GUI of the external connection device 200 is in the highest hierarchy (Yes at S506), then the control unit 201 of the external connection device 200 commands the data processing unit 206 to erase the GUI of the external connection device 200. The data processing unit 206 erases the GUI of the external connection device 200 (S508). The control unit 201 generates a command for displaying a GUI of the display device 100 and transmits the command to the display device 100 through the command input/output I/F 204 (S509).

The command input/output I/F 104 of the display device 100 receives the command for displaying a GUI of the display device 100 through the command cable 302 (S510). The control unit 101 commands the data processing unit 106 to create the GUI in the "display path". The data processing unit 106 creates the GUI of the display device 100 based on the value of the "display path" and transmits it to the display unit 107. The display unit 107 displays the GUI of the display device 100 thereon (S511). For example, if the "Return" button 122 on the remote controller 121 dedicated to the display device is pushed when "External connection Device GUI-1" is displayed on the display unit 107 along the path illustrated in Fig. 2A, "Display Device GUI-2" stored as the "display path" is displayed.

If the GUI which is being displayed on the display unit 107 is not the GUI of the external connection device 200 in the highest hierarchy (No at S506), then the control unit 201 of the external connection device 200 executes processing for displaying the GUI of the external connection device 200 in the next higher hierarchy (S507). For example, when the screen of the display unit 107 is transitioned from "External connection Device GUI-1" to "External connection Device GUI-2" along the path illustrated in Fig. 2A, "External connection Device GUI-1" is displayed again, through the processing at the step 507. More specifically, the control unit 201 of the external connection device 200 controls the data processing unit 206 to create the GUI of the external connection device 200 in the next higher hierarchy. The data processing unit 206 creates the GUI in the next higher hierarchy and transmits it to the display device 100 through the data output I/F 205. The data input I/F 105 of the display device 106 receives the GUI of the external connection device 200 in the next higher hierarchy and transfers it to the data processing unit 106 through the switch 108. The data processing unit 106 transmits the GUI of the external connection device 200 in the next higher hierarchy to the display unit 107.

In the present embodiment, when the display is changed over from a GUI of the display device 100 to a GUI of the external connection device 200 using the remote controller 121 dedicated to the display device, information about the GUI of the display device 100 is stored as a "display path" in the storage unit 102. This enables restoring the display of the display device from the GUI of the external connection device 200 to the GUI of the display device 100 using the remote controller 121 dedicated to the display device. Accordingly, when the previous GUI is restored from a state where a GUI of the external connection device 200 is displayed, it is possible to restore the previous GUI by operating the remote controller 121 dedicated to the display device, in the case where the previous GUI is a GUI of the display device 100 and in the case where the previous GUI is a GUI of the external connection device 200. This enables the user to restore GUIs in the order of transition, through simple procedure, without distinguishing between the display device 100 and the external connection device 200.

On the other hand, when a GUI of the external connection device 200 is directly displayed without displaying a GUI of the display device 100, that is, when a GUI of the external connection device 200 is displayed by operating the remote controller 221 dedicated to the external connection device, the "display path" is maintained at the default value. This prevents the previous GUI from being restored through the remote controller 121 dedicated to the display device. This can prevent the occurrence of an unintended operation that a GUI of the display device 100 is restored even though the display path is not passed through the GUI of the display device 100.

When a GUI of the external connection device 200 is displayed by passing through a GUI of the display device 100, it is also possible to display, on the screen of the display unit 107, information indicating that the GUI of the external connection device 200 is displayed by passing through the GUI of the display device 100. Accordingly, when this information is not displayed, it is possible to notify, preliminarily, the user of the fact that he or she can not restore the display to a GUI of the display device 100 from the GUI of the external connection device 200 using the "Return" button 122 on the remote controller 121 dedicated to the display device.

### (Second Embodiment)

In the present embodiment, the display device 100 and the external connection device 200 have the configurations illustrated in Fig. 1. There will be described the operation which is performed by the external connection device 200 when the "Return" button 222 on the remote controller 221 dedicated to the external connection device is pushed at a state where a GUI of the external connection device 200 is displayed on the display unit 107.

The user operation input unit 203 of the external connection device 200 determines whether or not the "Return" button 222 on the remote controller 221 dedicated to the external connection device is pushed (S601). If the "Return" button 222 is pushed (Yes at S601), the user operation input unit 203 notifies the control unit 201 that the "Return" button 222 has been pushed. The control unit 201 determines whether or not the GUI being displayed on the display unit 107 is the GUI of the external connection device 200 in the highest hierarchy, based on information about the GUI of the external connection device 200 which is stored in the storage unit 202(3602).

If the GUI being displayed on the display unit 107 is the GUI in the highest hierarchy (Yes at S602), the control unit 201 commands the data processing unit 206 to erase the GUI of the external connection device 200 (S603). The data processing unit 206 erases the GUI according to the command from the control unit 201 and transmits only video signals to the display device 100 through the data output I/F 205. Thus, only the video signals from the external connection device 200 are inputted to the data processing unit 106 of the display device 100. The display unit 107 of the display device 100 displays the video signals from the external connection device 200, but it displays neither a GUI of the external connection device 200 nor a GUI of the display device 100.

If the GUI being displayed on the display unit 107 is not the GUI of the external connection device 200 in the highest hierarchy (No at S602), the control unit 201 of the external connection device 200 commands the data processing unit 206 to create the GUI of the external connection device 200 in the next higher hierarchy (S604). The data processing unit 206 creates the GUI in the next higher hierarchy according to the command from the control unit 201 and transmits it to the display device 100 along with video signals, through the data output I/F 205. The display unit 107 displays the video signals from the external connection device 200 and the GUI of the external connection device 200 in the next higher hierarchy.

When the "Return" button 222 on the remote controller 221 dedicated to the external connection device is pushed, the control unit 101 of the display device 100 performs no operation. Accordingly, even if the "Return" button 222 of the external connection device 200 is pushed at a state where the GUI of the external connection device 200 in the highest hierarchy is displayed on the display unit 107 after displaying a GUI of the display device 100, the display is not restored to the GUI of the display device 100. This can prevent a GUI of the display device 100 from being displayed despite user's intentions, when the user operates the remote controller 221 dedicated to the external connection device for the sake of operating the external connection device 200.

### (Third Embodiment)

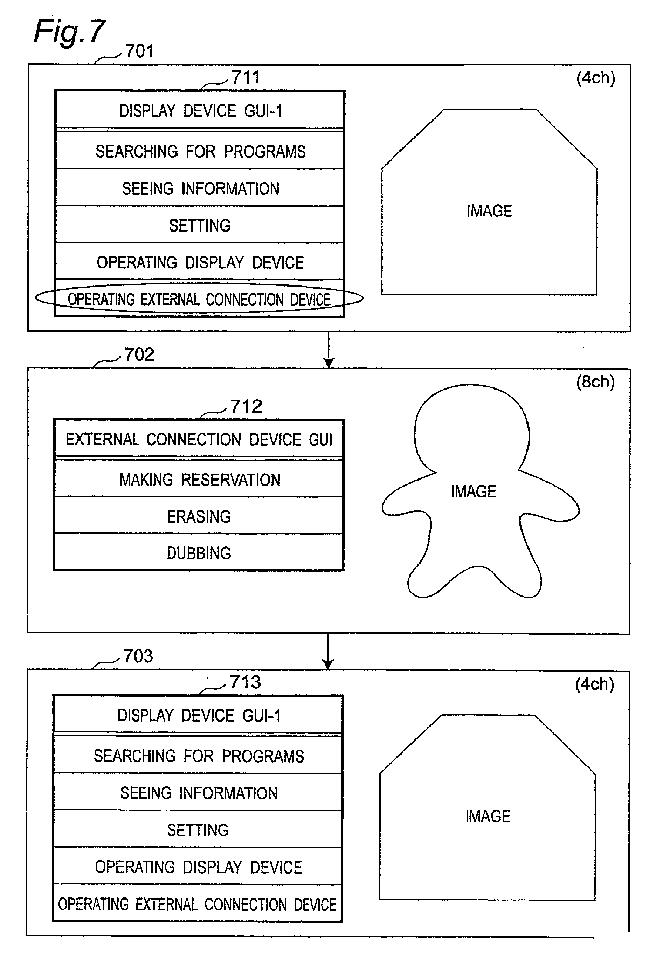

In the present embodiment, the display device 100 and the external connection device 200 have the configurations illustrated in Fig. 1. There will be described the switching of video signals displayed on the display unit 107 of the display device 100, with reference to Figs. 7 to 9.

Fig. 7 illustrates a transition among screen pages displayed on the display unit 107 of the display device 100.

In Fig. 7,
(1) a screen page 701 includes "Display Device GUI-1" 711 and an image of "the channel 4" received by the display device 100. The menu in "Display Device GUI-1" includes an item of "operating the external connection device".
(2) If the user selects the item "operating the external connection device" from the menu in "Display Device GUI-1", the display unit 107 displays a screen page 702. The screen page 702 includes "External connection Device GUI-1" 712 and an image of "the channel 8" transmitted from the external connection device 200.
(3) If the "Return" button 122 on the remote controller 121 dedicated to the display device is pushed at a state where the screen page 702 is displayed, the display unit 107 displays a screen page 703 which is the same as the screen page 701.

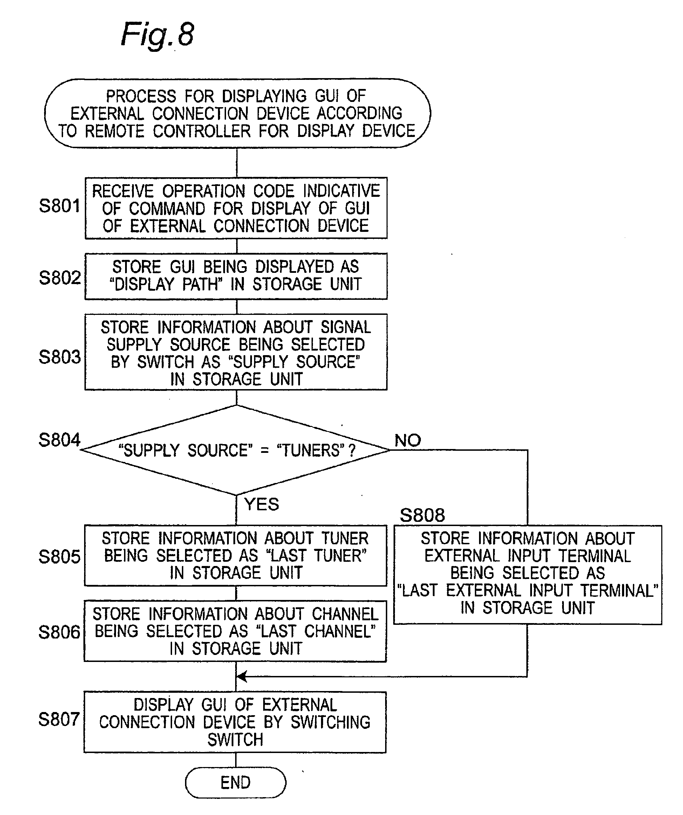

Fig. 8 illustrates the operation of the display device 100 at the time of the transition from the screen page 701 to the screen page 702 in Fig. 7. The control unit 101 of the display device 100 receives an operation code indicative of a command for displaying a GUI of the external connection device 200 through the user operation input unit 103 (S801). More specifically, if the user selects the item "operating the external connection device" using the remote controller 121 dedicated to the display device at the state where the screen page 701 is displayed on the display unit 107, the remote controller 121 dedicated to the display device transmits, to the user operation input unit 103 of the display device 100, a predetermined operation code indicating that the remote controller 121 has been operated. The control unit 101 of the display device 100 receives the operation code through the user operation input unit 103 and recognizes the fact that the item "operating the external connection device" displayed on the display unit 107 has been selected.

The control unit 101 stores, in the storage unit 102, information about the GUI being displayed on the display unit 107, as a value of "display path" (S802).

The control unit 101 stores, in the storage unit 102, information about the signal supply source which is connected to the switch 108 and supplies video signals, as a value of the "supply source" (S803). In the present embodiment, information for determining which of the external input terminals 111, the tuners 110 and the data input I/F 105 is connected to the switch 108 is stored as a value of the "supply source" in the storage unit 102. In Fig. 7, information indicating that the tuners 110 are selected is stored therein as a value of the "supply source".

The control unit 101 determines whether or not the value of the "supply source" indicates 'the tuners 110' (S804). If it indicates 'the tuners 110' (Yes at S804), the control unit 101 stores, in the storage unit 102, information about the tuner being selected, as a value of the "last tuner" (S805). For example, information for determining which of the tuners "1", "2", "3" in the tuners 110 illustrated in Fig. 1 is being selected is stored as a value of the "last tuner". The tuners "1", "2", "3" in the tuners 110 are a tuner for receiving terrestrial digital broadcasting, a tuner for receiving satellite broadcasting, and a tuner for receiving terrestrial analog broadcasting, for example.

Further, the control unit 101 stores, in the storage unit 102, information about the channel being selected, as a value of the "last channel" (S806). In Fig. 7, information indicative of "the channel 4" is stored as a "last channel".

If the value of the "supply source" does not indicate 'the tuners 110' (No at S804), the control unit 101 stores, in the storage unit 102, information about the external input terminal being selected, as a value of the "last external input terminal" (S808). For example, information for determining which of the external input terminals "1", "2", "3",..., in the external input terminals 110 illustrated in Fig. 1 is being selected is stored as a value of the "last external input terminal".

The control unit 101 connects the switch 108 to the data input I/F 105 and displays, on the display unit 107, video signals transmitted from the external connection device 200 and a GUI of the external connection device 200 (S807). This state corresponds to the screen page 702 in Fig. 7.

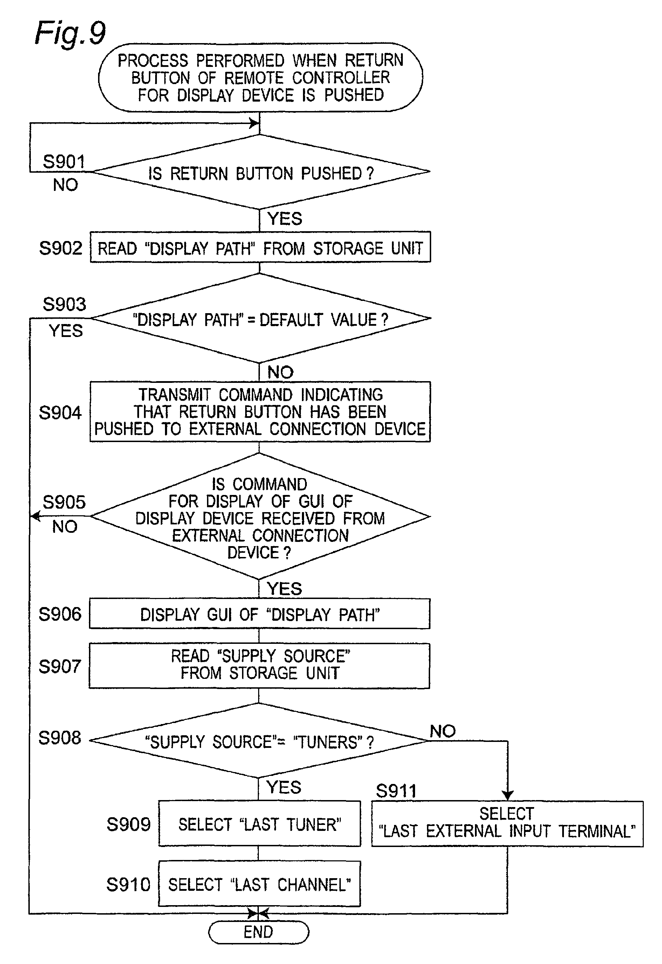

Fig. 9 illustrates the operation of the display device 100 at the time of the transition from the screen page 702 to the screen page 703 in Fig. 7. The user operation input unit 103 of the display device 100 determines whether or not the "Return" button 122 on the remote controller 121 dedicated to the display device is pushed (S901) . That is, the user operation input unit 103 determines whether or not it has received an operation code for restoring screen display. If the "Return" button 122 is pushed (Yes at S901), the user operation input unit 103 notifies the control unit 101 that the "Return" button 122 has been pushed. The control unit 101 reads the "display path" from the storage unit 102 (S902). The control unit 101 determines whether or not the "display path" has the default value (S903).

If the "display path" does not have the default value (No at S903), the control unit 101 creates a command indicating that the "Return" button 122 has been pushed and transmits the command to the external connection device 200 through the command input/output 1/F 104 (S904) . On receiving the command, the external connection device 200 executes the processing of S505 to S509 in Fig. 5.

The control unit 101 of the display device 100 determines whether or not it has received a command for displaying a GUI of the display device 100 from the external connection device 200 through the command input/output I/F 104 (S905). If the control unit 101 receives such a command (Yes at S905), the control unit 101 commands the data processing unit 106 to create a GUI based on the information about the "display path". The data processing unit 106 creates a GUI and transmits it to the display unit 107. The display unit 107 displays the GUI thereon (S906).

The control unit 101 reads the "supply source" from the storage unit 102 (S907). The control unit 101 determines whether or not the "supply source" is 'the tuners 110' (S908).

If the "supply source" is 'the tuners 110' (Yes at S908), the control unit 101 reads the "last tuner" from the storage unit 102 and selects the tuner indicated by the "last tuner" (S909). The control unit 101 further reads the "last channel" from the storage unit 102 and selects the channel indicated by the "last channel" (S910). In Fig. 7, the channel 4 is selected and displayed on the display unit 107.

If the "supply source" is not 'the tuners 110' (No at S908), the control unit 101 reads the "last external input terminal" from the storage unit 102 and controls the switch 108 such that it is connected to the external input terminal 111 indicated by the "last external input terminal" (S911).

As described above, if the "Return" button 122 on the remote controller 121 dedicated to the display device is pushed at a state where the GUI of the external connection device 200 in the highest hierarchy is displayed, the state of video signals, as well as the GUI, can be restored to the state thereof before the GUI of the external connection device 200 in the highest hierarchy is displayed.

If the "display path" has the default value (Yes at S903), the control unit 101 ends the processing without performing operations. That is, when a GUI of the external connection device 200 has been displayed without displaying a GUI of the display device 100, the display unit 107 keeps displaying the GUI of the external connection device 200 thereon.

Further, if the control unit 101 has not receive a command for displaying a GUI of the display device 100 (No at S905), the control unit 101 ends the processing without performing operations. That is, if the GUI of the external connection device 200 which is being displayed on the display unit 107 is not the GUI in the highest hierarchy, the GUI of the external connection device 200 in the next higher hierarchy is transmitted from the external connection device 200 and is displayed on the display unit 107.

Further, in the aforementioned embodiment, the information stored as the "last tuner" and the "last external input terminal" can be stored as a value of the "supply source". In this case, steps S805 and S808 for storing the "last tuner" and the "last external input terminal" and steps S909 and S911 for selecting the "last tuner" and the "last external input terminal" can be eliminated, and the connection destination of the switch 108 can be selected, based on the value of the "supply source" in S907.

Further, in the aforementioned embodiment, there is described a case where the switch 108 is connected to any one of the tuners or any one of the external input terminals in the case where the switch 108 is connected to the tuners 110 or the external input terminals 111, but the switch 108 can be connected to a plurality of tuners or a plurality of external input terminals. For example, the switch 108 can be connected to the tuners "1" and "2" in the tuners 110 at the same time. Further, in the aforementioned embodiment, there is described a case where the tuners 110 and the external input terminals 111 include the plurality of tuners and the plurality of external input terminals which are designated by "1", "2", "3",..., in Fig. 1. However, the number of tuners and the number of external input terminals are not limited to those in the aforementioned embodiment. For example, the tuners 110 can include only the tuner "1", and the external input terminals 111 can include only the external input terminal "1". Further, it is not necessary that the display device 100 includes both the tuners 110 and the external input terminals 111, and the display device 100 may include either the tuners 110 or the external input terminals 111, such as only the tuners 100, for example.

Further, in the first to third embodiments, information about the GUI of the display device 100 displayed just before a GUI of the external connection device 200 is displayed is stored as a value of the "display path" in the storage unit 102. However, information stored as a "display path" is not limited to information about the GUI of the display device 100 displayed just before the GUI of the external connection device 200 is displayed. Any of the GUIs of the display device 100 which have been temporarily displayed until a GUI of the external connection device 200 is displayed can be stored as a "display path". For example, the GUI of the display device 100 in the highest hierarchy, which is "Display Device GUI-1" in Fig. 2A, can be stored as a "display path".

Further, when the "Return" button 122 on the remote controller 121 dedicated to the display device is pushed, if the GUI being displayed on the display unit 107 of the display device 100 is not the GUI of the external connection device 200 in the highest hierarchy, the display device 100 and the external connection device 200 operate in such a way as to restore the GUI of the external connection device 200 at the next higher hierarchy. However, the display device 100 and the external connection device 200 may operate in such a way as to restore directly to a GUI of the display device 100 if the display has passed through the GUI of the display device 100, even when the GUI of the external connection device 200 is not the GUI in the highest hierarchy. In this case, it is possible to eliminate the processes in S506 and S507 in Fig. 5.

Further, in the first to third embodiments, there is described a case where the user performs operations of the display device 100 using the remote controller 121 dedicated to the display device. However, the display device 100 can operate in the same way as that in the aforementioned embodiments when the user directly operates the user operation input unit 103. For example, in the case where the user operation input unit 103 has the same button as the "Return" button 122 on the remote controller 121, and the user performs operations for restoring the displayed GUI to the GUI in the next higher hierarchy by pushing the "Return" button in the user operation input unit 103, the display device 100 may operate in the same way as that in the aforementioned embodiments. This applies to the external connection device 200.

In the aforementioned embodiment, the display device 100 is a television and the external connection device 200 is a DVD recorder. However, the display device 100 is not limited to a television and can be any device having a displaying function, such as a personal computer or a cellular phone. The external connection device 200 can be any device capable of outputting video signals to the display device 100 and includes, for example, a DVD player, a HDD player, an HDD recorder or the like.

### Industrial Applicability

The present invention offers the advantage of enabling restoring the display on a screen from a GUI of an external connection device to a GUI of a display device by operating the display device and can be widely applied to systems including a display device such as a TV and an external connection device connected to the display device.

## Claims

1. A display device (100) comprising:
a display unit (107) capable of displaying at least one of graphical user interfaces GUIs of the display device (100) and at least one of GUIs of an external connection device (200) that is connected to the display device(100), the GUI of the external connection device being independent of the GUI of the display device;
an operation input unit (103) that receives an operation code for operating the display device (100), directly or through a remote controller(121); and
a control unit (101) that controls the display device (100) based on the received operation codes;
**characterized in that**,
when the operation input unit (103) receives an operation code for restoring screen display while a GUI of the external connection device (200) is displayed on the display unit (107) after displaying a GUI of the display device (100), the control unit (101) controls screen display so that the screen page displayed on the display unit (107) is restored to the GUI of the display device (100),.
wherein the display device (100) further comprises a storage unit (102), wherein, when the display unit (107) displays a GUI of the external connection device (200) after displaying a GUI of the display device (100), the control unit (101) stores information about the GUI of the display device (100), in the storage unit (102), and
when the screen display of the display unit (107) is restored from the GUI of the external connection device (200) to the GUI of the display device (100), the control unit (101) controls the display unit (107) to display the GUI of the display device (100), based on the information about the GUI of the display device that is stored in the storage unit (102),.
wherein when the operation input unit (103) receives the operation code for restoring screen display, the control unit (101) informs the external connection device (200) of reception of the operation code for restoring screen display, and
when the control unit (101) receives a command for displaying a GUI of the display device (100) from the external connection device (200), the control unit (101) controls the display unit (107) to display the GUI of the display device based on the information stored in the storage unit (102),
wherein when the operation input unit (103) receives the operation code for restoring screen display, the control unit (101) determines whether or not information about a GUI of the display device is stored in the storage unit (102) and, if the information about a GUI of the display device (100) is stored in the storage unit (102), the control unit (101) informs the external connection device (200) of reception of the operation code for restoring screen display.

2. The display device (100) according to claim 1, further comprising:
at least one of signal supply sources that input video signals to be dis-played on the display unit (107);
wherein, when the display unit (107) displays a GUI of the external connection device (200) after displaying a GUI of the display device (100), the control unit (101) stores, in the storage unit (102), information about the signal supply source being selected, and
when the screen display is restored from the GUI of the external connection device (200) to the GUI of the display device (100), the control unit (101) reads the information about the signal supply source from the storage unit (102) and controls the display unit (107) to display video signals from the signal supply source which is selected based on the read information about the signal supply source.

3. An external connection device (200) comprising:
a data output unit (205) that transmits, to a display device (100), graphical user interfaces GUIs of the external connection device (200), the GUI of the external connection device being independent of the GUI of the display device;
a command input/output unit (204) that transmits and receives commands to and from the display device (100); and
a control unit (201) that controls the external connection device (200);
**characterized in that**, when the command input/output unit (204) receives, from the display device (100), a command indicating reception of an operation code for restoring screen display on the display device, the control unit (201) determines whether or not the GUI of the external connection device being transmitted to the display device (100) is a screen page in a highest hierarchy and, if the control unit (201) determines that the GUI of the external connection device being transmitted to the display device (100) is the screen page in the highest hierarchy, the control unit (201) stops the transmission of the GUI of the external connection device (200) and transmits, to the display device (100), a command for displaying a GUI of the display device (100), through the command input/output unit (204).

4. A screen control method for a display device (100) capable of displaying, on its display unit (107), at least one of graphical user interfaces GUIs of the display device (100) and at least one of GUIs of an external connection device (200) that is connected to the display device (100), the GUI of the external connection device being independent of the GUI of the display device, the method comprising:
receiving an operation code for operating the display device (100) directly or through a remote controller; and
**characterized by** controlling the display unit (107) to display a GUI of the display device (100), when receiving an operation code for restoring screen display of the display device (100) while a GUI of the external connection device (200) is displayed on the display unit (107) after displaying the GUI of the display device (100) thereon,
further comprising:
storing information about the GUI of the display device (100), in a storage unit (102) of the display device (100) when a GUI of the external connection device (200) is displayed after a GUI of the display device (100) is displayed,
wherein, when the screen display is restored from the GUI of the external connection device (200) to the GUI of the display device (100), the display unit (100) is controlled to display the GUI of the display device (100) based on the information about the GUI of the display device (100) that is stored in the storage unit (102),
informing the external connection device (200) of reception of the operation code for restoring screen display of the display device (100), and
determining whether or not a command for displaying a GUI of the display device (100) is received from the external connection device (200),
wherein, the display unit (107) is controlled to display the GUI of the display device (100) based on the information stored in the storage unit (102), when the command for displaying a GUI of the display device (100) is received from the external connection device (200),
determining whether or not information about a GUI of the display device (100) is stored in the storage unit (102) when receiving the operation code for restoring screen display of the display device (100),
wherein, when information about a GUI of the display device (100) is stored in the storage unit (102), the external connection device (200) is informed of reception of the operation code for restoring screen display of the display device (100).

5. The screen control method according to claim 4, wherein the display device (100) comprises at least one of signal supply sources that receive video signals,
the method further comprising: storing information about the signal supply source being selected, in the storage unit (102), when the display unit (107) displays a GUI of the external connection device (200) after displaying a GUI of the display device (100);
wherein the information about the signal supply source is read from the storage unit (102), and the display unit (107) is controlled to display video signals from the signal supply source which is selected based on the read information about the signal supply source, when the screen display is restored from the GUI of the external connection device (200) to the GUI of the display device (100).

## Patentansprüche

1. Anzeigevorrichtung (100), mit:
einer Anzeigeeinheit (107), die dazu in der Lage ist, wenigstens eine von grafischen Benutzerschnittstellen GUI der Anzeigevorrichtung (100) und wenigstens eine von GUI einer externen Verbindungsvorrichtung (200), die mit der Anzeigevorrichtung (100) verbunden ist, anzuzeigen, wobei die GUI der externen Verbindungsvorrichtung unabhängig von der GUI der Anzeigevorrichtung ist,
eine Betriebseingabeeinheit (103), die einen Betriebscode zum Betreiben der Anzeigevorrichtung (100) entweder direkt oder durch eine Fernbedienung (121) empfängt, und
eine Steuereinheit (101), die die Anzeigevorrichtung (100) auf Basis der empfangenen Betriebscodes steuert,
**gekennzeichnet dadurch, dass**,
wenn die Betriebseingabeeinheit (103) einen Betriebscode zum Zurücksetzen einer Bildschirmanzeige erhält, während eine GUI der externen Verbindungsvorrichtung (200) auf der Anzeigeeinheit (107) nach einer Anzeige einer GUI der Anzeigevorrichtung (100) angezeigt wird, die Steuereinheit (101) die Bildschirmanzeige derart steuert, dass die Bildschirmseite, die auf der Anzeigeeinheit (107) angezeigt wird, auf die GUI der Anzeigevorrichtung (100) zurückgesetzt wird,
wobei die Anzeigevorrichtung (100) ferner eine Speichereinheit (102) umfasst, wobei, wenn die Anzeigeeinheit (107) eine GUI der externen Verbindungsvorrichtung (200) nach einem Anzeigen einer GUI der Anzeigevorrichtung (100) anzeigt, die Steuereinheit (101) Information hinsichtlich der GUI der Anzeigevorrichtung (100) in der Speichereinheit (102) speichert, und,
wenn die Bildschirmanzeige der Anzeigeeinheit (107) von der GUI der externen Verbindungsvorrichtung (200) auf die GUI der Anzeigevorrichtung (100) zurückgesetzt wird, die Steuereinheit (101) auf Basis der Information über die GUI der Anzeigevorrichtung, die in der Speichereinheit (102) gespeichert ist, die Anzeigeeinheit (107) dazu steuert, dass die GUI der Anzeigevorrichtung (100) angezeigt wird,
wobei, wenn die Betriebseingabeeinheit (103) den Betriebscode zum Zurücksetzen der Bildschirmanzeige erhält, die Steuereinheit (101) die externe Verbindungsvorrichtung (200) über den Empfang des Betriebscodes zum Zurücksetzen der Bildschirmanzeige informiert, und,
wenn die Steuereinheit (101) einen Befehl zum Anzeigen einer GUI der Anzeigevorrichtung (100) von der externen Verbindungsvorrichtung (200) empfängt, die Steuereinheit (101) auf Basis der Information, die in der Speichereinheit (102) gespeichert ist, die Anzeigeeinheit (107) dazu steuert, dass die GUI der Anzeigevorrichtung angezeigt wird,
wobei, wenn die Betriebseingabeeinheit (103) den Betriebscode zum Zurücksetzen der Bildschirmanzeige erhält, die Steuereinheit (101) bestimmt, ob Information hinsichtlich einer GUI der Anzeigevorrichtung in der Speichereinheit (102) gespeichert ist, und, wenn die Information hinsichtlich einer GUI der Anzeigeeinheit (100) in der Speichereinheit (102) gespeichert ist, die Steuereinheit (101) die externe Verbindungsvorrichtung (200) über den Empfang des Betriebscodes zum Zurücksetzen der Bildschirmanzeige informiert.

2. Anzeigevorrichtung (100) nach Anspruch 1, ferner mit:
wenigstens einer Signalzuführquelle, die Videosignale eingibt, die auf der Anzeigeeinheit (107) anzuzeigen sind,
wobei, wenn die Anzeigeeinheit (107) eine GUI der externen Verbindungsvorrichtung (200) nach einem Anzeigen einer GUI der Anzeigevorrichtung (100) anzeigt, die Steuereinheit (101) in der Speichereinheit (102) Information hinsichtlich der Signalzuführquelle speichert, die ausgewählt ist, und,
wenn die Bildschirmanzeige von der GUI der externen Verbindungsvorrichtung (200) auf die GUI der Anzeigevorrichtung (100) zurückgesetzt wird, die Steuereinheit (101), die Information hinsichtlich der Signalzuführquelle aus der Speichereinheit (102) ausliest und die Anzeigeeinheit (107) auf Basis der ausgelesenen Information über die Signalzuführquelle steuert, damit Videosignale von der Signalzuführquelle angezeigt werden, die ausgewählt ist.

3. Externe Verbindungsvorrichtung (200), mit:
einer Datenausgabeeinheit (205), die an eine Anzeigevorrichtung (100) grafische Benutzerschnittstellen GUI der externen Verbindungsvorrichtung (200) übermittelt, wobei die GUI der externen Verbindungsvorrichtung unabhängig von den GUI der Anzeigevorrichtung sind,
einer Befehlseingabe-/Ausgabeeinheit (204), die Befehle von der Anzeigeeinheit (100) empfängt und Befehle an die Anzeigeeinheit (100) übermittelt, und
einer Steuereinheit (201), die die externe Verbindungsvorrichtung (200) steuert,
**gekennzeichnet dadurch, dass**, wenn die Befehlseingabe-/Ausgabeeinheit (204) von der Anzeigevorrichtung (100) einen Befehl empfängt, der einen Empfang eines Betriebscodes zum Zurücksetzen der Bildschirmanzeige auf der Anzeigevorrichtung angibt, die Steuereinheit (201) bestimmt, ob die GUI der externen Verbindungsvorrichtung, die an die Anzeigevorrichtung (100) übermittelt wird, eine Bildschirmseite in einer höchsten Hierarchie ist, und, wenn die Steuereinheit (201) bestimmt, dass die GUI der externen Verbindungsvorrichtung, die an die Anzeigevorrichtung (100) übermittelt wird, die Bildschirmseite in der höchsten Hierarchie ist, die Steuereinheit (201) die Übermittlung der GUI der externen Verbindungsvorrichtung (200) abbricht und an die Anzeigevorrichtung (100) über die Befehlseingabe-/Ausgabeeinheit (204) einen Befehl zum Anzeigen einer GUI der Anzeigevorrichtung (100) übermittelt.

4. Bildschirmsteuerverfahren für eine Anzeigevorrichtung (100), die zum Anzeigen auf einer Anzeigeeinheit (107) von wenigstens einer von grafischen Benutzerschnittstellen GUI der Anzeigevorrichtung (100) und wenigstens einer von GUI einer externen Verbindungsvorrichtung (200), die mit der Anzeigevorrichtung (100) verbunden ist, ausgestaltet ist, wobei die GUI der externen Verbindungsvorrichtung von den GUI der Anzeigevorrichtung unabhängig sind, wobei das Verfahren umfasst:
Empfangen eines Betriebscodes zum Betreiben der Anzeigevorrichtung (100) direkt oder über eine Fernbedienung, und
**gekennzeichnet durch** ein Steuern der Anzeigeeinheit (107) zum Anzeigen einer GUI der Anzeigevorrichtung (100), wenn ein Betriebscode zum Zurücksetzen einer Bildschirmanzeige der Anzeigevorrichtung (100) empfangen wird, während eine GUI der externen Verbindungsvorrichtung (200) auf der Anzeigeeinheit (107) nach einem Anzeigen der GUI der Anzeigevorrichtung (100) darauf angezeigt wird,
ferner mit:
Speichern von Information über die GUI der Anzeigevorrichtung (100) in einer Speichereinheit (102) der Anzeigevorrichtung (100), wenn eine GUI der externen Verbindungsvorrichtung (200) angezeigt wird, nachdem eine GUI der Anzeigevorrichtung (100) angezeigt wurde,
wobei, wenn die Bildschirmanzeige von der GUI der externen Verbindungsvorrichtung (200) auf die GUI der Anzeigevorrichtung (100) zurückgesetzt wird, die Anzeigeeinheit (100) auf Basis der Information hinsichtlich der GUI der Anzeigevorrichtung (100), die in der Speichereinheit (102) gespeichert ist, gesteuert wird, um die GUI der Anzeigevorrichtung (100) anzuzeigen,
Informieren der externen Verbindungsvorrichtung (200) über den Empfang des Betriebscodes zum Zurücksetzen der Bildschirmanzeige der Anzeigevorrichtung (100), und
Bestimmen, ob ein Befehl zum Anzeigen einer GUI der Anzeigevorrichtung (100) von der externen Verbindungsvorrichtung (200) empfangen wurde,
wobei, wenn der Befehl zum Anzeigen einer GUI der Anzeigevorrichtung (100) von der externen Verbindungsvorrichtung (200) empfangen wurde, die Anzeigeeinheit (107) auf Basis der Information, die in der Speichereinheit (102) gespeichert ist, gesteuert wird, die GUI der Anzeigevorrichtung (100) anzuzeigen,
Bestimmen, ob Information über eine GUI der Anzeigevorrichtung (100) in der Speichereinheit (102) gespeichert ist, wenn der Betriebscode zum Zurücksetzen der Bildschirmanzeige der Anzeigevorrichtung (100) empfangen wurde,
wobei, wenn Information über eine GUI der Anzeigevorrichtung (100) in der Speichereinheit (102) gespeichert ist, die externe Verbindungsvorrichtung (200) über den Empfang des Betriebscodes zum Zurücksetzen der Bildschirmanzeige der Anzeigevorrichtung (100) informiert wird.

5. Bildschirmsteuerverfahren nach Anspruch 4, wobei die Anzeigevorrichtung (100) wenigstens eine Signalzuführquelle aufweist, die Videosignale empfängt,
wobei das Verfahren ferner umfasst: Speichern von Information über die ausgewählte Signalzuführquelle in der Speichereinheit (102), wenn die Anzeigeeinheit (107) eine GUI der externen Verbindungsvorrichtung (200) nach einem Anzeigen einer GUI der Anzeigevorrichtung (100) angezeigt,
wobei die Information über die Signalzuführquelle aus der Speichereinheit (102) ausgelesen wird und die Anzeigeeinheit (107) auf Basis der ausgelesenen Information hinsichtlich der Signalzuführquelle gesteuert wird, Videosignale von der ausgewählten Signalzuführquelle anzuzeigen, wenn die Bildschirmanzeige von der GUI der externen Verbindungsvorrichtung (200) auf die GUI der Anzeigevorrichtung (100) zurückgesetzt wird.

## Revendications

1. Dispositif d'affichage (100) comprenant :
une unité d'affichage (107) capable d'afficher au moins l'une des interfaces graphiques d'utilisateur GUI du dispositif d'affichage (100) et au moins l'une des GUI d'un dispositif de connexion externe (200) qui est connecté au dispositif d'affichage (100), la GUI du dispositif de connexion externe étant indépendante de la GUI du dispositif d'affichage ;
une unité d'entrée d'opération (103) qui reçoit un code d'opération pour faire fonctionner le dispositif d'affichage (100), directement ou par l'intermédiaire d'un dispositif de commande à distance (121) ; et
une unité de commande (101) qui commande le dispositif d'affichage (100) sur la base des codes d'opération reçus ;
**caractérisé en ce que**,
lorsque l'unité d'entrée d'opération (103) reçoit un code d'opération pour la restauration d'affichage d'écran tandis qu'une GUI du dispositif de connexion externe (200) est affichée sur l'unité d'affichage (107) après l'affichage d'une GUI du dispositif d'affichage (100), l'unité de commande (101) commande l'affichage d'écran de sorte que la page-écran affichée sur l'unité d'affichage (107) soit restaurée à la GUI du dispositif d'affichage (100).
dans lequel le dispositif d'affichage (100) comprend en outre une unité de stockage (102),
dans lequel, lorsque l'unité d'affichage (107) affiche une GUI du dispositif de connexion externe (200) après l'affichage d'une GUI du dispositif d'affichage (100), l'unité de commande (101) stocke des informations concernant la GUI du dispositif d'affichage (100), dans l'unité de stockage (102), et
lorsque l'affichage d'écran de l'unité d'affichage (107) est restauré à partir de la GUI du dispositif de connexion externe (200) à la GUI du dispositif d'affichage (100), l'unité de commande (101) commande l'unité d'affichage (107) pour afficher la GUI du dispositif d'affichage (100), sur la base des informations concernant la GUI du dispositif d'affichage qui sont stockées dans l'unité de stockage (102),
dans lequel lorsque l'unité d'entrée d'opération (103) reçoit le code d'opération pour la restauration d'affichage d'écran, l'unité de commande (101) informe le dispositif de connexion externe (200) de la réception du code d'opération pour la restauration d'affichage d'écran, et
lorsque l'unité de commande (101) reçoit une commande pour afficher une GUI du dispositif d'affichage (100) à partir du dispositif de connexion externe (200), l'unité de commande (101) commande l'unité d'affichage (107) pour afficher la GUI du dispositif d'affichage sur la base des informations stockées dans l'unité de stockage (102),
dans lequel lorsque l'unité d'entrée d'opération (103) reçoit le code d'opération pour la restauration d'affichage d'écran, l'unité de commande (101) détermine si des informations concernant une GUI du dispositif d'affichage sont stockées dans l'unité de stockage (102) ou non et, si les informations concernant une GUI du dispositif d'affichage (100) sont stockées dans l'unité de stockage (102), l'unité de commande (101) informe le dispositif de connexion externe (200) de la réception du code d'opération pour la restauration d'affichage d'écran.

2. Dispositif d'affichage (100) selon la revendication 1, comprenant en outre :
au moins l'une des sources de fourniture de signaux qui introduisent des signaux vidéo à afficher sur l'unité d'affichage (107) ;
dans lequel, lorsque l'unité d'affichage (107) affiche une GUI du dispositif de connexion externe (200) après l'affichage d'une GUI du dispositif d'affichage (100), l'unité de commande (101) stocke, dans l'unité de stockage (102), des informations concernant la source de fourniture de signaux étant sélectionnée, et
lorsque l'affichage d'écran est restauré à partir de la GUI du dispositif de connexion externe (200) à la GUI du dispositif d'affichage (100), l'unité de commande (101) lit les informations concernant la source de fourniture de signaux à partir de l'unité de stockage (102) et commande l'unité d'affichage (107) pour afficher des signaux vidéo provenant de la source de fourniture de signaux qui est sélectionnée sur la base des informations lues concernant la source de fourniture de signaux.

3. Dispositif de connexion externe (200) comprenant :
une unité de sortie de données (205) qui transmet, à un dispositif d'affichage (100), des interfaces graphiques d'utilisateur GUI du dispositif de connexion externe (200), la GUI du dispositif de connexion externe étant indépendante de la GUI du dispositif d'affichage ;
une unité d'entrée/sortie de commandes (204) qui transmet des commandes au dispositif d'affichage (100) et qui reçoit des commandes à partir de celui-ci ; et
une unité de commande (201) qui commande le dispositif de connexion externe (200) ;
**caractérisé en ce que**, lorsque l'unité d'entrée/sortie de commandes (204) reçoit, à partir du dispositif d'affichage (100), une commande indiquant la réception d'un code d'opération pour la restauration d'affichage d'écran sur le dispositif d'affichage, l'unité de commande (201) détermine si la GUI du dispositif de connexion externe étant transmise au dispositif d'affichage (100) est une page-écran dans la hiérarchie la plus élevée ou non et, si l'unité de commande (201) détermine que la GUI du dispositif de connexion externe étant transmise au dispositif d'affichage (100) est la page-écran dans la hiérarchie la plus élevée, l'unité de commande (201) arrête la transmission de la GUI du dispositif de connexion externe (200) et transmet, au dispositif d'affichage (100), une commande pour afficher une GUI du dispositif d'affichage (100), à travers l'unité d'entrée/sortie de commandes (204).

4. Procédé de commande d'écran pour un dispositif d'affichage (100) capable d'afficher, sur son unité d'affichage (107), au moins l'une des interfaces graphiques d'utilisateur GUI du dispositif d'affichage (100) et au moins l'une des GUI d'un dispositif de connexion externe (200) qui est connecté au dispositif d'affichage (100), la GUI du dispositif de connexion externe étant indépendante de la GUI du dispositif d'affichage, le procédé comprenant le fait :
de recevoir un code d'opération pour faire fonctionner le dispositif d'affichage (100) directement ou par l'intermédiaire d'un dispositif de commande à distance ; et
**caractérisé par** le fait de commander l'unité d'affichage (107) pour afficher une GUI du dispositif d'affichage (100), lors de la réception d'un code d'opération pour la restauration d'affichage d'écran du dispositif d'affichage (100) tandis qu'une GUI du dispositif de connexion externe (200) est affichée sur l'unité d'affichage (107) après l'affichage de la GUI du dispositif d'affichage (100) sur celle-ci,
comprenant en outre le fait :
de stocker des informations concernant la GUI du dispositif d'affichage (100), dans une unité de stockage (102) du dispositif d'affichage (100) lorsqu'une GUI du dispositif de connexion externe (200) est affichée après l'affichage d'une GUI du dispositif d'affichage (100),
dans lequel, lorsque l'affichage d'écran est restauré à partir de la GUI du dispositif de connexion externe (200) à la GUI du dispositif d'affichage (100), l'unité d'affichage (107) est commandée pour afficher la GUI du dispositif d'affichage (100) sur la base des informations concernant la GUI du dispositif d'affichage (100) qui sont stockées dans l'unité de stockage (102),
d'informer le dispositif de connexion externe (200) de la réception du code d'opération pour la restauration d'affichage d'écran du dispositif d'affichage (100), et
de déterminer si une commande pour afficher une GUI du dispositif d'affichage (100) est reçue à partir du dispositif de connexion externe (200) ou non,
dans lequel, l'unité d'affichage (107) est commandée pour afficher la GUI du dispositif d'affichage (100) sur la base des informations stockées dans l'unité de stockage (102), lorsque la commande pour afficher une GUI du dispositif d'affichage (100) est reçue à partir du dispositif de connexion externe (200),
de déterminer si des informations concernant une GUI du dispositif d'affichage (100) sont stockées dans l'unité de stockage (102) ou non lors de la réception du code d'opération pour la restauration d'affichage d'écran du dispositif d'affichage (100),
dans lequel, lorsque des informations concernant une GUI du dispositif d'affichage (100) sont stockées dans l'unité de stockage (102), le dispositif de connexion externe (200) est informé de la réception du code d'opération pour la restauration d'affichage d'écran du dispositif d'affichage (100).

5. Procédé de commande d'écran selon la revendication 4, dans lequel le dispositif d'affichage (100) comprend au moins l'une des sources de fourniture de signaux qui reçoivent des signaux vidéo,
le procédé comprenant en outre le fait : de stocker des informations concernant la source de fourniture de signaux étant sélectionnée, dans l'unité de stockage (102), lorsque l'unité d'affichage (107) affiche une GUI du dispositif de connexion externe (200) après l'affichage d'une GUI du dispositif d'affichage (100) ;
dans lequel les informations concernant la source de fourniture de signaux sont lues à partir de l'unité de stockage (102), et l'unité d'affichage (107) est commandée pour afficher des signaux vidéo provenant de la source de fourniture de signaux qui est sélectionnée sur la base des informations lues concernant la source de fourniture de signaux, lorsque l'affichage d'écran est restauré à partir de la GUI du dispositif de connexion externe (200) à la GUI du dispositif d'affichage (100).
